# EUROPEAN PATENT SPECIFICATION

(11) **EP 1 140 495 B1**
(45) Date of publication and mention of the grant of the patent: **23.02.2005**
(21) Application number: 99961617.0
(22) Date of filing: 09.11.1999
(51) Int. Cl.: B32B 27/34, B32B 27/32

(54) **THERMOFORMABLE SEALANT MATERIALS**
THERMOFORMBARE SIEGELMATERIALIEN
MATERIAUX D'ETANCHEITE THERMOFORMABLES

(30) Priority: 09.11.1998 US 107714 P
(43) Date of publication of application: 10.10.2001
(73) Proprietor: E.I. DU PONT DE NEMOURS AND COMPANY, Wilmington, Delaware 19898 (US)
(72) Inventor: FLIEGER, Hans, Dieter, CH-1234 Vessy (CH); HAUSMANN, Karlheinz, CH-2012 Auvernier (CH)
(74) Representative: Abitz, Walter, Dr.-Ing.
(86) International application number: PCT/US1999/026476
(87) International publication number: WO 2000/027633

(56) References cited:
- EP-A- 0 720 910
- DATABASE WPI Section Ch, Week 199709 Derwent Publications Ltd., London, GB; Class A17, AN 1997-094955 XP002134400 & JP 08 332702 A (SUMITOMO BAKELITE CO LTD), 17 December 1996 (1996-12-17)

## Description

### FIELD OF THE INVENTION

The present invention relates to ethylene copolymer compositions that are useful for fabricating films used as sealant materials that have to sustain elevated temperatures.

More particularly, the ethylene copolymer compositions of the present invention can be used as sealant materials in flexible film structures used for example for packaging of meat and poultry items that have to be subjected to elevated temperatures for a limited time while in the package as this is common for pasteurization and sterilization applications.

### BACKGROUND OF THE INVENTION

Ionomers are thermoplastic resins that contain metal ions in addition to organic-chain molecules. Ionomers have solid-state properties characteristic of crosslinked polymers and melt-processing properties characteristic of uncrosslinked thermoplastic polymers : see for example US Patent 3,264,272. Major applications of ionomers are in the area of packaging.

In particular ionomers have found widespread use for applications such as meat packaging where low sealing temperature, high seal strength and high hot tack strength is important for high packaging speed and high sealant reliability. In particular for meat packaging another feature of ionomers, meat adhesion, is used to provide additional benefit in terms of water retention in the meat. This is in particular desirable in order to maintain a good looking meat or sausage package.

One of the main drawbacks of ionomers is also their advantage. Combined with the low sealing temperature they are also characterized by a low melting temperature and are therefore restrained to those packaging applications that do not require exposure to elevated temperatures such as commonly used in sterilization and pasteurization treatments where the package including the content is heated up to temperatures between 70-110°C, more preferably between 75-90°C for times ranging from 5 to 20 minutes. Under these conditions the seal strength usually suffers and meat adhesion is totally lost.

This invention relates to a method and composition that overcomes these restrictions.

As disclosed in JP 05193081 to Mitsubishi, ionomers can be used in blends with polyamides for packaging films. These alloys are characterized through improved pin-hole resistance and oxygen barrier. This is due to their excellent compatibility with polyamides. In this way it is possible to improve certain mechanical properties and still maintain most of the favorable properties of ionomers which are well known to those skilled in the art such as low seal temperature, high seal strength and hot tack strength as well as good meat adhesion. However, thermal properties, such as Vicat temperature are usually not improved making these blends.

JP 08332702 A to Sumitomo claims a compounded multilayer film comprising a sealing layer made of 100 parts by wt. of ethylene ionomer, 5 to 100 parts by wt. of crystalline polyamide, 10 to 160 parts by weight of polypropylene and 10 to 50 parts by wt. of acid copolymer. Such a composition, in addition to containing four difficult to mix components, has poor optical properties and tends to delaminate due to insufficient compatibility between polypropylene and the other components.

JP 07276591 A to Mitsubishi Corp. claims a laminated film where the sealing layer consists of a blend of polyamides with up to 10% of an ionomer. Although having the required temperature resistance, this type of composition has an elevated sealing temperature due to the fact that the polyamide forms the continuous phase.

EP 0720910 A1 to W.R. Grace & Co.-Conn. discloses an at least three layer film which can contain a layer based upon a predominant amount of a crystalline polyamide diluted.with a minor amount of a material which disrupts the crystallinity of the crystalline polyamide. The preferred material used to disrupt the crystallinity of the crystalline polyamide is another polyamide, although materials such as ethylene-acid copolymers may also be used. The reference also does not disclose using the crystalline polyamide-based layer as a sealant layer.

It was, therefore, surprising and unexpected to discover that packages with such sealing layers which are made up of blends of the current invention and subject to the above mentioned heat treatments will very well sustain such treatments and maintain superior meat adhesion although the continuous phase in these blends is the ionomer.

### SUMMARY OF THE INVENTION

The present invention provides a sealing material for a thermoplastic packaging film in particular for application such as meat, poultry and sausage packages that have to be subject to moderate heat treatments common in processes such as pasteurization or sterilization. The sealing material includes a flexible packaging film with at least two layers of which one is a sealant layer. The sealant layer comprises an ionomer sealant material suitable for packaging food that can sustain temperatures 70-110°C, made up of a blend of
(a) 65-90 wt.% of a copolymer of ethylene and an α,β-unsaturated C₃-C₈ carboxylic acid, wherein said α,β-unsaturated C₃-C₈ carboxylic acid is present in a range of 1-30 wt.% of the copolymer, wherein the acid groups of said copolymer are neutralized from 10-99.5 % with cations of at least one metal; and
(b) 10-35 wt.% of an amorphous and/or semicrystalline polyamide.

The copolymer may further contain an acrylate, and may be processed by e. g. extruding or casting a sheet or blowing a film.

The ethylene copolymer composition of the present invention overcomes the aforementioned problems of insufficient temperature resistance by providing a means of superior stability surprisingly obtained by a blend with a minor portion of a higher melting polymer, which forms the discontinuous phase in the aforementioned blend while still maintaining all sealing advantages of the ionomer itself.

### DETAILED DESCRIPTION OF THE INVENTION

This invention consists of the applications of blends of ionomers and amorphous and/or semicrystalline polyamides as sealant layers for shrinkable bags for meat packaging with improved temperature resistance.

The components of the blend are described in more detail below.

### Ionomer

The ionomers used in the present invention are derived from direct copolymers of ethylene and α,β-ethylenically-unsaturated C₃- C₈ carboxylic acid ("ethylene-acid copolymers") by neutralization with metal ions. By "direct copolymer", it is meant that the copolymer is made by polymerization of monomers together at the same time, as distinct from a "graft copolymer" where a monomer is attached or polymerized onto an existing polymer chain. Methods of preparing such ionomers are well known and are described in U.S. Patent No. 3,264,272 which is herein incorporated by reference. Preparation of the direct ethylene-acid copolymers on which the ionomers are based is described in U.S. Patent No. 4,351,931 which is also incorporated by reference herein.

The ethylene-acid copolymers used to make the ionomeric copolymer of this invention can be E/X/Y copolymers where E is ethylene; X is a softening comonomer and Y is the α,β-ethylenically-unsaturated C₃- C₈ carboxylic acid, particularly acrylic or methacrylic acid. Preferably, however, the ethylene-acid copolymer is a dipolymer (no softening comonomer). The preferred acid moieties are methacrylic acid and acrylic acid.

By "softening", it is meant that the polymer is made less crystalline. Suitable "softening" comonomers (X) are monomers selected from alkyl acrylate, and alkyl methacrylate, wherein the alkyl groups have from 1 - 12 carbon atoms which, when present, may be up to 30 (preferably up to 25, most preferably up to 15) wt.% of the ethylene-acid copolymer.

A wide range of percent acid moiety in the ethylene-acid copolymer may be used. The acid moiety is present in a range of 1 to 30 weight percent of the acid copolymer, preferably in a range of 5 to 30, more preferably in a range of 5 to 25, still more preferably in a range of 10 to 25, and alternatively 10 to 20. The ethylene-acid copolymers with high levels of acid are difficult to prepare in continuous polymerizers because of monomer-polymer phase separation. This difficulty can be avoided however by use of "cosolvent technology" as described in U.S. Patent No. 5,028,674 which is also incorporated herein by reference or by employing somewhat higher pressures than those at which copolymers with lower acid can be prepared.

The ethylene-acid copolymers are partially neutralized (10 to 99.5 percent) with metal cations, particularly monovalent and/or bivalent metal cations. Preferably 10-80%, more preferably 20-80%, and still more preferably 25 to 70% of the acid is neutralized. Preferred metal cations include lithium, sodium, and zinc, or a combination of such cations. Zinc is most preferred in blends with polyamide.

Preferred ethylene-acid dipolymers are ethylene/acrylic acid and ethylene/methacrylic acid. Specific other copolymers include ethylene/n-butyl acrylate/acrylic acid, ethylene/n-butyl acrylate/methacrylic acid, ethylene/iso-butyl acrylate/methacrylic acid, ethylene/iso-butyl acrylate/acrylic acid, ethylene/n-butyl methacrylate/methacrylic acid, ethylene/methyl methacrylate/acrylic acid, ethylene/methyl acrylate/acrylic acid, ethylene/methyl acrylate/methacrylic acid, ethylene/methyl methacrylate/methacrylic acid, and ethylene/n-butyl methacrylate/acrylic acid.

Suitable ionomers for use in the present invention are commercially available under the trademark SURLYN® from the DuPont Company.

### Amorphous Nylon

Amorphous polyamides are well known to those skilled in the art (particularly as selected from among those described in U.S. Patents 4,952,628 and 4,990,562). "Amorphous polyamide," as used herein, refers to those polyamides which are lacking in crystallinity as shown by the lack of an endothermic crystalline melting peak in a Differential Scanning Calorimeter ("DSC") measurement (ASTM D-3417), 10°C/minute heating rate.

Examples of amorphous polyamides are those prepared from the following diamines: hexamethylenediamine, 2-methylpentamethylenediamine, 2,2,4- and 2,4,4-trimethylhexamethylenediamine, bis(4-aminocyclohexyl)methane, 2,2-bis(4-aminocyclohexyl)isopropylidine, 1,4- and 1,3 diaminocyclohexane, meta-xylylenediamine, 1,5-diaminopentane, 1,4-diaminobutane, 1,3-diaminopropane, 2-ethyldiaminobutane, 1,4-diaminomethylcyclohexane, p-xylyenediamine, m- and p-phenylenediamine, and alkyl-substituted m- and p-phenylenediamine. These examples are prepared from the following dicarboxylic acids: iso- and terephthalic acid, alkyl-substituted iso- and tere-phthalic acid, adipic acid, sebacic acid, butane dicarboxylic acid, and the like.

Specific examples of the amorphous polyamides that can be used include hexamethylenediamine isophthalamide/terephthalamide having iso/terephthalic moiety ratios of 100/0 to 60/40, mixtures of 2,2,4- and 2,4,4-trimethylhexamethylenediamine terephthalamide, copolymers of hexamethylene diamine and 2-methylpentamethylenediamine with iso-or terephthalic acids, or mixtures of these acids. Polyamides based on hexamethylenediamine iso/terephthalamide containing high levels of terephthalic acid moiety may also be useful provided a second diamine such as 2-methyldiaminopentane is incorporated to produce a processible amorphous polymer.

Amorphous polyamides may contain, as comonomers, minor amounts of lactam species such as caprolactam or lauryl lactam, even though polymers based on these monomers alone are not amorphous as long as they do not impart crystallinity to the polyamide. In addition, up to about 10 wt. % of a liquid or solid plasticiser such as glycerol, sorbitol, mannitol, or aromatic sulfonamide compounds (such as "Santicizer 8" from Monsanto) may be included with the amorphous polyamide.

The amorphous polyamide may also be selected from those containing less than about 100 milli-equivalents of terminal carboxyl groups per kilogram of polyamide, as disclosed in U.S. Patent No. 5,126,402. Preferably, those amorphous polyamides having less than 85 or less than 55 milliequivalents per kilogram may be used.

### Semicrystalline Nylon

Semicrystalline polyamides used in the present invention are well known to those skilled in the art. Semicrystalline polyamides suitable for this invention are generally prepared from lactams or amino acids, such as nylon-6 or nylon-11, or from condensation of diamines such as hexamethylene diamine with dibasic acids such as succinic, adipic, or sebacic acid. Copolymers and terpolymers of these polyamides are also included.

Preferred semicrystalline polyamides are polyepsiloncaprolactam (nylon-6), polyhexamethylene adipamide (nylon-66), most preferably nylon-6. Other semicrystalline polyamides useful in the present invention include nylon-11, nylon-12, nylon-12,12 and copolymers and terpolymers such as nylon-6/66, nylon-6/10, nylon-6/12, nylon-66/12, nylon-6/66/610 and nylon-6/6T. In the three-component blend, nylon 6 is the most preferred semicrystalline polyamide.

In the framework of this invention we have surprisingly found that although the ionomers in the aforementioned composition form the continuous phase of the film and although their melting temperature does not surpass 100°C, the temperature performance of sealant films having the above compositional range is largely superior to the ionomer itself and can sustain typical sterilization and pasteurization conditions.

The advantage of this improvement can be manifold in various applications but is mainly intended for sealants in applications preferably but not exclusively in food packaging where heat treatments as mentioned above are a requirement.

### Examples

Materials used:
- Ionomer 1: 10% MAA, MFI=5 (190C/2.16kg)
- Ionomer 2: 15% MAA, MFI= 14 (190C/2.16kg)
- Ionomer 3: 20% MAA, MFI = 2.5 (190C/2.16kg)

Ionomers 1,2,3 can be commercially obtained from E. I. du Pont de Nemours and Company under the tradename Surlyn® 1652, 1702, 8140.

PA6 , which was commercially obtained from BASF as Ultramid B36 characterized by a MVR of 36 respectively.

Bynel® 41 E623 is a tie layer commonly used for pasteurizable meat structures. It can be commercially obtained from DuPont.

Subsequently these materials were prepared as a salt an pepper blend and fed to a 50 mm Reifenhaeuser extruder. This extruder was part of a 3 layer Reifenhauser blown film line equipped with a BARMAG 3 layer die, where the following 3 layer structure was prepared.

### PA6/Tie/Sealant

| | | |
|---|---|---|
| PA6 | fed to extruder 1 | Ultramid B36 |
| Tie | fed to extruder 2 | Bynel 41E623 |
| Sealant | fed to extruder 3 | Described in Examples |

The temperature Profile that was established was as follows:

| | 1 | 2 | 3 | 4 | 5 | Die |
|---|---|---|---|---|---|---|
| Extruder 1 | 220 | 220 | 230 | 240 | 240 | 240 |
| Extruder 2 | 170 | 180 | 190 | 200 | 210 | 220 |
| Extruder 3 | 180 | 190 | 200 | 210 | 220 | 230 |

The so obtained three layer blown film having a diameter of ca 6cm was subsequently filled with processed meat to form a typical sausage. The packages were subsequently cooked in water at a temperature of 95°C for 10 Minutes.

The following results were determined thereafter:

Melt Temperature of the sealant was measured with DSC according to ASTM 1238. Meat Adhesion was measured by pulling the film off the meat after cooking and subsequently cooling down of the package to room temperature. The sausage was opened and the package removed. Any processed meat retained on the packaging film was removed with a knife from the empty package, weighed and the weight divided by the packaging film surface recorded.

| Examples: | Ionomer | PA6 | Melt Temp | Meat Adhesion |
|---|---|---|---|---|
| Comp EX 1 | 100% Ion 3 | 0 | 80 | 0 |
| EX 1 | 70% Ion3 | 30% | 80 | 0.5 (g/dm2) |
| Ex 2 | 80% Ion2 | 20%PA6 | 85 | 0.3 |
| EX3 | 85% Ion3 | 15%PA6 | 95 | 0.2 |

It was surprisingly found that although the melting temperature of these blends is similar to the ionomers forming these blends the meat adhesion increases significantly through the addition of low levels of PA. This is in line with an increase of temperature stability which is important for applications being subject to heat treatment.

Such sealant materials can therefore be used as sealing materials in, optionally thermoformable, shrink films which can optionally be also oriented or bi-oriented, together with at least one other structural or barrier layer and tie layer. Examples include structures such as PA/Sealant, LDPE/tie/EVOH/tie/Sealant, Sealant/tie/EVOH/tie/Sealant or PA/tie/EVOH/tie/Sealant. EVOH is ethylenecovinylalcohol, a common oxygen barrier layer used in meat packaging instead of the more commonly used polyamide.

## Claims

1. A flexible packaging film with at least two layers of which one is a sealant layer, **characterized in that** said sealant layer is an ionomer sealant material suitable for packaging food that can sustain temperatures 70-110°C, made up of a blend of
(a) 65-90 wt.% of a copolymer of ethylene and an α,β-unsaturated C₃-C₈ carboxylic acid, wherein said α,β-unsaturated C₃-C₈ carboxylic acid is present in a range of 1-30 wt.% of the copolymer, wherein the acid groups of said copolymer are neutralized from 10-99.5 % with cations of at least one metal; and
(b) 10-35 wt.% of an amorphous and/or semicrystalline polyamide.

2. A flexible packaging film according to claim 1, **characterized in that** the metal cations are chosen from Na, K, Li, Mg, Ca, and Zn.

3. A flexible packaging film according to claim 1, **characterized in that** the metal cations are chosen from Li, Na, and Zn.

4. A flexible packaging film according to claim 1, **characterized in that** the metal cations are Zn.

5. A flexible packaging film according to claim 1, **characterized in that** the copolymer further contains a softening comonomer chosen from alkyl acrylates and alkyl methacrylates.

6. A flexible packaging film according to claim 1, **characterised in that** the α, β-unsaturated C₃-C₈ carboxylic acid is chosen from acrylic acid and methacrylic acid.

7. A flexible packaging film according to claim 1, **characterized in that** the acid groups of the copolymer are neutralized from 20-80 %.

8. A flexible packaging film according to claim 1 that is oriented or bi-oriented.

9. A flexible packaging film according to any one of claims 1-8, **characterized in that** the blend contains the ionomer as the continuous phase and the polyamide as the discontinuous phase.

10. Meat packages comprising said flexible packaging film according to claims 1-9 that, when subjected to heat treatments between 70-110°C after meat is packaged, retain meat adhesion.

11. The meat packages of claim 10 wherein the meat packages are thermoformed bags, shrinkable bags or sausage casings.

## Patentansprüche

1. Flexibler Verpackungsfilm mit mindestens zwei Schichten, von denen die eine eine Siegelschicht ist, **dadurch gekennzeichnet, dass** jene Siegelschicht ein Versiegelungsmaterial aus einem lonomer ist, welches für das Verpacken von Nahrungsmitteln geeignet ist und Temperaturen von 70 - 110°C aushalten kann, wobei das Versiegelungsmaterial hergestellt ist aus einer Mischung von
(a) 65-90 Gew.-% eines Copolymers aus Ethylen und einer α,β - ungesättigten C₃-C₈ Carboxylsäure, in welcher jene α,β - ungesättigte C₃-C₈ Carboxylsäure in einem Umfang von 1 - 30 Gew.-% des Copolymers vorhanden ist, in welcher die Säuregruppen jenes Copolymers zu 10 - 99,5 % mit Kationen von mindestens einem Metall neutralisiert werden; und
(b) 10 - 35 Gew.-% eines amorphen und / oder halbkristallinen Polyamids.

2. Flexibler Verpackungsfilm gemäß Anspruch 1, **dadurch gekennzeichnet, dass** die Metallkationen ausgewählt sind aus Na, K, Li, Mg, Ca und Zn.

3. Flexibler Verpackungsfilm gemäß Anspruch 1, **dadurch gekennzeichnet, dass** die Metallkationen ausgewählt sind aus Li, Na und Zn.

4. Flexibler Verpackungsfilm gemäß Anspruch 1, **dadurch gekennzeichnet, dass** die Metallkationen aus Zn bestehen.

5. Flexibler Verpackungsfilm gemäß Anspruch 1, **dadurch gekennzeichnet, dass** das Copolymer weiterhin ein weichmachendes Comonomer enthält, welches unter Akylacrylaten und Alkylmethacrylaten ausgewählt wird.

6. Flexibler Verpackungsfilm gemäß Anspruch 1, **dadurch gekennzeichnet, dass** die α,β - ungesättigte C₃-C₈ Carboxylsäure unter einer Acrylsäure und einer Methacrylsäure ausgewählt wird.

7. Flexibler Verpackungsfilm gemäß Anspruch 1, **dadurch gekennzeichnet, dass** die Säuregruppen des Copolymers zu 20 - 80 % neutralisiert werden.

8. Flexibler Verpackungsfilm gemäß Anspruch 1, welcher orientiert oder zweifach orientiert ist.

9. Flexibler Verpackungsfilm gemäß irgendeinem der Ansprüche 1-8, **dadurch gekennzeichnet, dass** die Mischung das lonomer als die kontinuierliche Phase und das Polyamid als die diskontinuierliche Phase enthält.

10. Fleischverpackungen, welche jenen flexiblen Verpackungsfilm gemäß den Ansprüchen 1-9 enthalten und welche, wenn sie Wärmebehandlungen zwischen 70 - 110°C ausgesetzt sind, nachdem das Fleisch verpackt ist, ihre Haftung an dem Fleisch beibehalten.

11. Fleischverpackungen gemäß Anspruch 10, bei welchen die Fleischverpackungen thermogeformte Taschen, schrumpfbare Taschen oder Umhüllungen für Wurst sind.

## Revendications

1. Film d'emballage flexible avec au moins deux couches dont une est une couche d'étanchéité, **caractérisé en ce que** ladite couche d'étanchéité est un matériau d'étanchéité ionomère approprié pour l'emballage d'aliments qui peut supporter des températures de 70-110°C, composé d'un mélange:
(a) de 65-90% en poids d'un copolymère d'éthylène et d'un acide carboxylique C₃-C₈ α,β-insaturé, dans lequel ledit acide carboxylique C₃-C₈ α,β-insaturé est présent dans un intervalle de 1-30% en poids du copolymère, dans lequel les groupes acides dudit copolymère sont neutralisés à 10-99,5% avec des cations d'au moins un métal; et
(b) de 10-35% en poids d'un polyamide amorphe et/ou semi-cristallin.

2. Film d'emballage flexible suivant la revendication 1, **caractérisé en ce que** les cations métalliques sont choisis parmi Na, K, Li, Mg, Ca et Zn.

3. Film d'emballage flexible suivant la revendication 1, **caractérisé en ce que** les cations métalliques sont choisis parmi Li, Na et Zn.

4. Film d'emballage flexible suivant la revendication 1, **caractérisé en ce que** les cations métalliques sont Zn.

5. Film d'emballage flexible suivant la revendication 1, **caractérisé en ce que** le copolymère contient en outre un co-monomère ramollissant choisi parmi des acrylates d'alkyle et des méthacrylates d'alkyle.

6. Film d'emballage flexible suivant la revendication 1, **caractérisé en ce que** l'acide carboxylique C₃-C₈ α,β-insaturé est choisi parmi l'acide acrylique et l'acide méthacrylique.

7. Film d'emballage flexible suivant la revendication 1, **caractérisé en ce que** les groupes acides du copolymère sont neutralisés à 20-80%.

8. Film d'emballage flexible suivant la revendication 1, qui est orienté ou bi-orienté.

9. Film d'emballage flexible suivant l'une quelconque des revendications 1 à 8, **caractérisé en ce que** le mélange contient l'ionomère en tant que phase continue et le polyamide en tant que phase discontinue.

10. Emballages pour viande comprenant ledit film d'emballage flexible suivant les revendications 1 à 9 qui, lorsqu'ils sont soumis à des traitements thermiques entre 70 et 110°C après l'emballage de la viande, conservent l'adhérence à la viande.

11. Emballages pour viande suivant la revendication 10, où les emballages pour viande sont des sacs thermoformés, des sacs rétractables ou des boyaux à saucisses.
